# EUROPEAN PATENT SPECIFICATION

(11) **EP 3 034 224 B1**
(45) Date of publication and mention of the grant of the patent: **29.11.2017**
(21) Application number: 15199433.2
(22) Date of filing: 10.12.2015
(51) Int. Cl.: B23K 1/00, B23K 1/005, B23K 26/06, B23K 26/08, B23K 26/10, B23K 1/19

(54) **METHOD OF AND SYSTEM FOR BRAZING METAL COMPONENTS**
VERFAHREN UND SYSTEM ZU HARTLÖTEN METALLISCHER BAUTEILE
SYSTÈME ET PROCÉDÉ DE BRASAGE POUR BRASER DEUX COMPOSANTS METALLIQUES

(30) Priority: 12.12.2014 IT PD20140338
(43) Date of publication of application: 22.06.2016
(73) Proprietor: Ceppi & Partners S.r.l., 31053 Pieve di Soligo (TV) (IT)
(72) Inventor: MAROBIN, Mario, I-36020 Campiglia dei Berici (VI) (IT); LEDER, Matteo, I-36010 Posina (VI) (IT); CEPPI, Ugo, I-31053 Pieve di Soligo (TV) (IT)
(74) Representative: Gallo, Luca

(56) References cited:
- DE-U1-202011 000 456
- JP-A- 2000 079 463
- JP-A- 2007 275 949
- JP-A- 2012 255 846
- US-A- 6 164 517

## Description

### Field of application

The present invention regards a brazing method according to the preamble of claim 1 (see, for example, JP2000079463 A9, and a system for performing brazing according to the preamble of claim 13 (see, for example, DE202011000456). The method and the system, object of the present invention, are inserted in the scope of the working and assembly of components made of metal materials, in particular copper, at least one of which has tubular shape and in particular exploits laser radiation as energy source for performing brazing of junctions between such elements.

More in detail, the method and the system in accordance with the invention have been developed for the assembly of finned-pack heat exchangers with particular reference to the junction of the closure curved elements of the hydraulic circuit to the ends of the tubes of the exchanger, and are therefore intended to be advantageously employed in the industrial fields of climate-control, of refrigeration and of treatment of drinks and foods; nevertheless, they can also be used in different industrial fields.

### State of the art

As is known, brazing is the technique most commonly employed for the junction of components made of metal materials, without melting them. Brazing is generally used when it is suitable to limit the supply of heat to the components to be joined, when the aesthetic appearance of the junction is important or when it is important to ensure the hermetic seal or pressurized seal of the junction.

The brazing process provides for supplying a specific alloy, generally indicated as alloy or filler material in the technical jargon of the field, having a melting temperature lower than the melting temperature of the materials that constitute the components to be joined; such filler alloy, brought in the liquid phase, is diffused via capillarity into the junction slit defined between the components to be joined.

Conventionally, the melting of the filler alloy is performed by means of the use of a flame derived from the combustion of oxygen with hydrocarbons.

With specific reference to the technical field of production and assembly of finned-pack heat exchangers, brazing is usually employed for joining different components of the hydraulic circuit of the exchangers, as will be better described hereinbelow, and must ensure an optimal pressurized hydraulic seal, as well as an optimal resistance to the deformation of the components subjected to thermal cycles and generally to mechanical stresses.

More in detail, as is known, a finned-pack heat exchanger comprises a plurality of fins, usually made of aluminum or copper, stacked to define a pack and compacted together with terminal plates, and one or more coil-like hydraulic circuits defined by a plurality of tubes, generally made of copper, mounted in the pack and inserted through holes provided on the fins. In particular, the hydraulic circuits are made in the assembly step of the exchangers by means of the insertion of so-called small forks, i.e. U-shaped bent tubes which are extended for a length greater than that of the finned pack in the through holes of the fins, the subsequent mechanical expansion of the small forks in order to fit them with the fins, and the closure of the open ends of the small forks by means of the connection of the latter with the so-called return curved elements, i.e. C-shaped bent tube sections, in order to create one or more coil-like circuits for the passage of the fluid. In addition, the heat exchanger is completed by means of one or more manifolds for supply and discharge of the fluid, which connect together the various hydraulic circuits outside the finned pack and which are joined together at the free ends of the small forks that have remained decoupled. The junctions between the small forks and curved elements and between small forks, tubes and manifolds are usually made by means of brazing, as previously specified.

The seal of the hydraulic circuit thus attained is subsequently verified by insufflating air or gas at its interior and immersing the exchanger in water in order to verify the presence of possible leaks, or by performing an inspection of the circuit by means of tracing gas. In the typical process of manufacturing the finned-pack heat exchangers, the small fork-curve junctions and the hydraulic connections with the manifolds are normally executed with a manual brazing method by means of liquid-gas torch. The filler material is in such case manually supplied by the operator together with the brazing flame, or it is manually pre-assembled in ring-form around the curved elements before the brazing procedure. The method in such case thus provides that the operator manually directs the flame by covering the junction zone, in order to cause the melting of the filler material, such that the latter penetrates via capillarity into the junction interstices between small forks and curved elements or between tubes and small forks and manifolds, ensuring the mechanical seal and pressurized hydraulic seal of the circuit.

A first drawback of such conventional brazing method consists of its poor reliability. Indeed, the quality of the performed brazing very much depends on the ability of the operator; moreover, such operator cannot ensure constant and prolonged performances over time. A second drawback lies in the obvious slowness of the manual method. A third drawback lies in the poor safety of this method, given that the operator is exposed to easy injuries. Finally, a fourth drawback lies in the physical limits of the flame employed in such method, which is not capable of reaching temperatures higher than a limit value dependent on the specific fuel employed for generating the flame, and therefore it does not allow performing brazing with any desired filler material.

In order to reduce the working times and improve the reliability of the brazing method, an induction brazing method has been implemented which provides for the generation of an intense alternating magnetic field in proximity to the junction zone, such that electric currents which are generated in the components to be joined and in the filler alloy, due to the oscillating magnetic field, heat the latter until they cause the melting of the filler alloy.

Also the latter brazing method has in practice demonstrated that it does not lack drawbacks. The main drawbacks of such method consist of the shape and size constraints of the magnetic field generation device, which only render it suitable for making brazed joints having precise shape and size characteristics, and of the difficulty in optimally reaching, with the magnetic field generation device, the junction zones in particular of the small forks and of the curved elements, above all for very narrow arrangements of the small forks themselves.

A further brazing method employed in the production of finned-pack heat exchangers provides for the insertion of the exchanger arranged in vertical position and with the curved elements pre-assembled on the free ends of the small forks in a suitable furnace provided with a plurality of burning nozzles, each of which is susceptible of directing a flame towards the zones of junction of the curved elements to the small forks.

Such method, even if it allows a minimum degree of automation, has the considerable drawback of being poorly versatile, since the arrangement of the burning nozzles in the furnace is adapted for performing the brazing of the curved element-small fork junctions only for specific arrangements of the latter on the finned pack. In addition, the above-described method is not adapted to be used for any desired heat exchanger, since not all heat exchangers have size that allows the insertion thereof in the furnace, or not all can be easily arranged in vertical position.

A further considerable drawback of the above-described method consists of the fact that such method requires a set-up of the system, and hence it becomes advantageous with respect to the conventional manual torch brazing only if high numbers of heat exchangers are assembled, in particular provided with the same hydraulic circuit geometry.

Finally, brazing methods are known in the art which employ laser radiation as energy source in order to cause the melting of the filler material. Such methods are in particular used in the automobile industry where aesthetically-appreciable junctions are requested. Such junctions must have suitable mechanical strength characteristics, but they do not have to ensure resistance to thermal cycles or ensure pressurized airtight seal, with pressures that can even reach several hundred bars - requirements that the junctions provided in the above-described heat exchangers must instead have. Therefore, the junctions obtained by means of brazing method in the automotive field can support the presence of pores or defects, which would otherwise be unacceptable for the brazed junctions prearranged in the assembly of finned-pack heat exchangers.

The patent EP 1 920 864 describes a method and a device for brazing by means of laser aimed to reduce the number of pores and defects present in the filler material at the end of the brazing. Such method provides for the prearrangement of a bead of filler material along the line of junction between two components, a first irradiation of such bead with a first laser beam, which causes the melting thereof in order to obtain the junction between the two components, and a second irradiation of the melted and preferably re-solidified bead with a second laser beam adapted to perform a thermal post-treatment on the junction bead, in order to reduce the presence of defects and pores in the latter. The device for brazing by means of laser described herein comprises an operating head provided with first and second emission means respectively of the first and second aligned laser beams, which are advantageously arranged at distance from each other sufficient to allow at least the partial solidification of the melted bead by the first laser beam before the second laser beam irradiates it.

The method and the device described in the patent EP 1 920 864, nevertheless, as much as they allow reducing the defects present in the filler material at the end of the brazing, are unable to ensure the sealing characteristics under pressure, and the thermal fatigue strength characteristics of the joint necessary in the case of junctions prearranged in finned-pack heat exchangers. The irradiation of only the bead and its annealing in fact facilitates the incorporation of scum in the junction bead itself, hence considerably reducing the thermal fatigue strength of the junction.

In addition, the device briefly described above would not be suitable for making junctions via brazing between the curved elements and the small forks of a finned-pack heat exchanger, since the curvature of the junction profile between the latter and the possible limited size of the cross sections of the small forks and of the curved elements to be joined would not allow the first and second emission means of the operating head of the device described in the patent EP 1 920 864 to simultaneously irradiate the bead of filler material.

The patent JP 2008000814 describes an apparatus and a method of known type employed in the automobile field for performing brazing between two steel metal plates, by means of laser irradiation.

More in detail, the aforesaid apparatus of known type comprises an operating head provided with an emitting device adapted to emit a laser beam along a rectilinear junction slit between the two plates to be joined.

The apparatus also comprises an injection device adapted to deposit a powder of filler material on the junction slit.

In operation, the emitting device of the apparatus only emits the laser beam on the powder of filler material in order to melt it, in a manner such that the filler material penetrates into the junction slit, without the laser beam irradiating the areas of the plates not covered with the filler material powder, in order to prevent damaging the plates themselves.

The patent DE 10032975 describes an apparatus and a method of known type adapted to perform brazing, by means of laser irradiation, between two aluminum metal components, of which one has tubular shape.

More in detail, the aforesaid method of known type provides for irradiating, with a laser beam, a paste of aluminum-based filler material deposited along the junction slit between the two components, in a manner such to melt such paste in order to make it penetrate into the junction slit itself.

In particular, the entire method occurs in inert gas atmosphere in order to prevent the aluminum of the paste of filler material, being heated, from reacting with oxygen and generating high quantities of alumina which, as is known, is not subjected to melting and hence does not allow making an appropriate brazing joint.

The apparatuses and methods of known type described in the aforesaid documents JP 2008 000814 and DE 10032975 are not particularly suitable for making brazed joints with pressurized hydraulic seal, since the laser beam that directly hits the powder or paste of filler material causes the partial sublimation of the filler material itself, hence involving the penetration of a reduced quantity of filler material into the junction slit. Consequently, the filler material may not completely and uniformly fill the junction slit, leaving empty zones that negatively affect the pressurized hydraulic seal between the two joined components.

The documents DE 102007025461 and DE 202011000456 describe two devices of known type adapted to execute the welding of two metal components by means of laser beams. In addition, the document DE 202011051161 describes a device of known type provided with multiple operating heads adapted to emit laser beams for cutting metal tubes.

Therefore, the devices of known type described in the aforesaid documents DE 102007025461, DE 202011000456 and DE 202011051161 are not at all suitable for making brazing joints between metal components (in particular between components for heat exchangers), simultaneously ensuring structural integrity and absence of hydraulic losses under pressure, as is in particular required between components for heat exchangers.

Document JP 2000 079463 describes a device of the known type for joining two metal components of a heat exchanger by means of an oven provided with infra-red lamps which directly hit the powder or paste of filler material for the brazing. The device disclosed therein is not suitable for overcoming the aforementioned problem of hydraulic losses under pressure due to partial sublimation of the filler material during the brazing process.

Document JP 2012 255846 describes a method for fixing an optical fiber on a metallized layer, which envisages to arrange a solder preform on the metalized layer and to direct a laser beam towards an optical fiber mount, which serves as a thermal cushion and on which the metallized layer is mounted. The method disclosed therein is not suitable for making brazing joints between metal components (in particular for heat exchangers), since it cannot ensure structural integrity and absence of hydraulic losses under pressure. Document DE 20 2011 000456 describes a welding device for fixing hollow components to a bottom component by means of a laser beam. The device disclosed herein is not suitable for performing a brazing joint between two metal components.

### Presentation of the invention

The problem underlying the present invention is therefore that of overcoming the drawbacks manifested by the above-described solutions of known type, by providing a method and a system for performing brazing, which are capable of ensuring the obtainment of sealed brazed joints, which are sealed even under pressure and provided with an optimal mechanical strength and an optimal thermal fatigue strength.

A further object of the present invention is to provide a brazing method which is entirely reliable and not dependent on the ability of an operator.

Another object of the present invention is to provide a brazing method which is versatile. A further object of the present invention is to provide a brazing method which is simple, inexpensive and quick to attain, in particular not requiring the prearrangement of pre-oxidized components to be brazed.

Another object of the present invention is to provide a brazing method which is entirely safe to achieve.

A further object of the present invention is to provide a brazing method which allows making junctions between components made of any desired material and employing any desired filler alloy.

Another object of the present invention is to provide a system for performing brazing which can be used for making brazed junctions on finned-pack heat exchangers of any desired size and having the free ends of the small forks to be joined with the curved elements arranged according to any desired geometry, without requiring a previous set-up.

Another object of the present invention is to provide a system for performing brazing which is capable of easily reaching the junction zone, even if the latter is arranged in a position that does not allow good maneuvering space.

A brazing method for joining two metal components and a system for performing brazing according to the present invention are defined in claims 1 and 13 respectively.

### Brief description of the drawings

The technical characteristics of the invention, according to the aforesaid objects, can be clearly seen in the contents of the below-reported claims and the advantages thereof will be clearer from the following detailed description, made with reference to the enclosed drawings, which represent a merely exemplifying and non-limiting embodiment of the invention, in which:
- figure 1 shows a simplified example of a finned-pack heat exchanger provided with small forks and curved elements susceptible of being joined together by means of the brazing method according to the present invention;

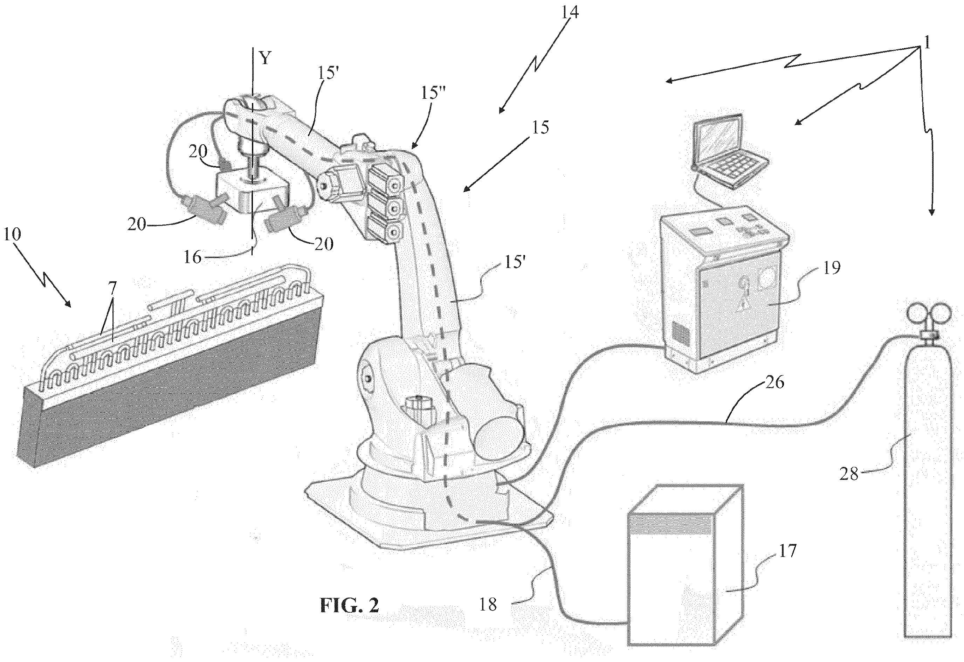

- figure 2 shows a top perspective view of the system for performing brazing in accordance with the present invention;
- figure 3 shows a detail of the system in accordance with the present invention relative to an operating head according to a first embodiment thereof, during the head-head joining of two tubular components;
- figure 4 shows the operating head of figure 3, during the T-shaped junction of two tubular components;
- figure 5 shows a section view of a detail of the operating head of the system according to the present invention relative to a provided emitting device in accordance with a first embodiment thereof;
- figure 6 shows a section view of an emitting device of the operating head in accordance with a second embodiment thereof;
- figure 7 shows the operating head of the system in accordance with the present invention according to a second embodiment thereof provided with an emitting device in accordance with the first embodiment of the latter;
- figure 8 shows the second embodiment of the operating head of the system in accordance with the present invention provided with an emitting device in accordance with the second embodiment of the latter.

### Detailed description

With reference to the enclosed drawings, reference number 1 overall indicates a system according to the present invention for performing brazing in particular by means of a method, also object of the present invention.

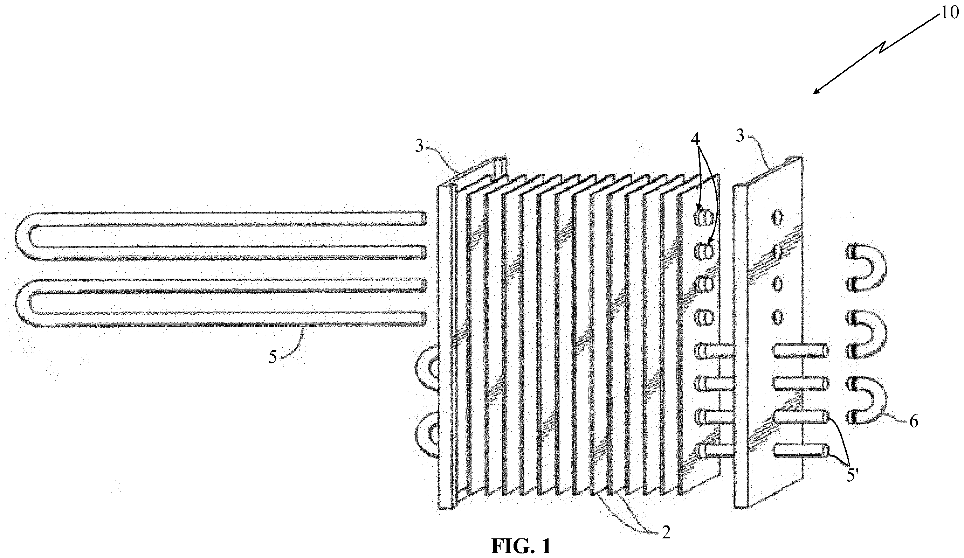

The present system 1 and method have been in particular developed for being employed in the assembly of finned-pack heat exchangers, such as the exchanger 10 illustrated merely by way of example in the enclosed Figure 1.

More generally, the system 1 and the method are adapted to be used for joining together metal components, at least one of which having tubular shape, i.e. they are adapted for performing brazing along closed junction profiles and in particular substantially circular junction profiles.

As is known, finned-pack heat exchangers comprise a plurality of fins 2, usually made of aluminum or copper, stacked to define a pack and packed together with terminal plates 3, and one or more coil-like hydraulic circuits defined by a plurality of tubes, preferably made of copper, mounted in the pack and inserted in suitable through holes 4 provided on the fins 2. In particular, as specified above, the hydraulic circuits are susceptible of being made in the assembly step of the exchangers 10 by means of the insertion of the small forks 5 in the through holes 4 of the fins 2 and the fixing, to the free ends 5' of the small forks 5, of return curved elements 6, in order to create one or more coil-like circuits for the passage of the fluid. In addition, the heat exchanger 10 is usually completed by means of one or more manifolds 7 for supply and discharge of the fluid which connect together the various hydraulic circuits outside the finned pack and which are joined together at the free ends 5' of the small forks 5 that remained uncoupled, by means of tubular connectors.

The small forks 5, the return curved elements 6 and the tubular connectors have a cross section of external diameter generally comprised between about 5 mm and about 30 mm and walls having thickness usually comprised between 0.4 mm and 1 mm. The manifolds 7 have a cross section with external diameter usually equal to at least 15 mm.

The system 1 and the method according to the present invention are in particular adapted for performing brazing in order to make the junction between the return curved elements 6 of the hydraulic circuit and the free ends 5' of the small forks 5 of the exchanger 10, the junction between the manifolds 7 and the tubular connectors as well as the junction between the free ends 5' of the small forks 5 and the tubular connectors, being capable of ensuring optimal sealing properties, even under pressure, as well as optimal mechanical strength and thermal fatigue strength for the junctions themselves, as better explained hereinbelow. Such junction characteristics are essential in the above-specified application context.

Of course, the system 1 and the method in accordance with the present invention can be employed for making junction brazing between hydraulic and mechanical components that are also different from those mentioned above and also belonging to different fields of the art, without departing from the protective scope defined by the present patent. The system 1 and the method can in particular be advantageously employed if it is necessary to make junctions having the abovementioned optimal strength and seal characteristics. In accordance with the idea underlying the present invention, the brazing method for joining two metal components comprises the operating steps described hereinbelow. First of all, provision is made for a step of prearranging a first metal component 8, provided with a connection end 8' of tubular shape, and with a second metal component 9 provided with a connection portion 9'. Also the latter component 9 can have tubular shape, as illustrated in the enclosed figures. Otherwise, the second component 9 can have a different shape, such as a flat or box-like shape.

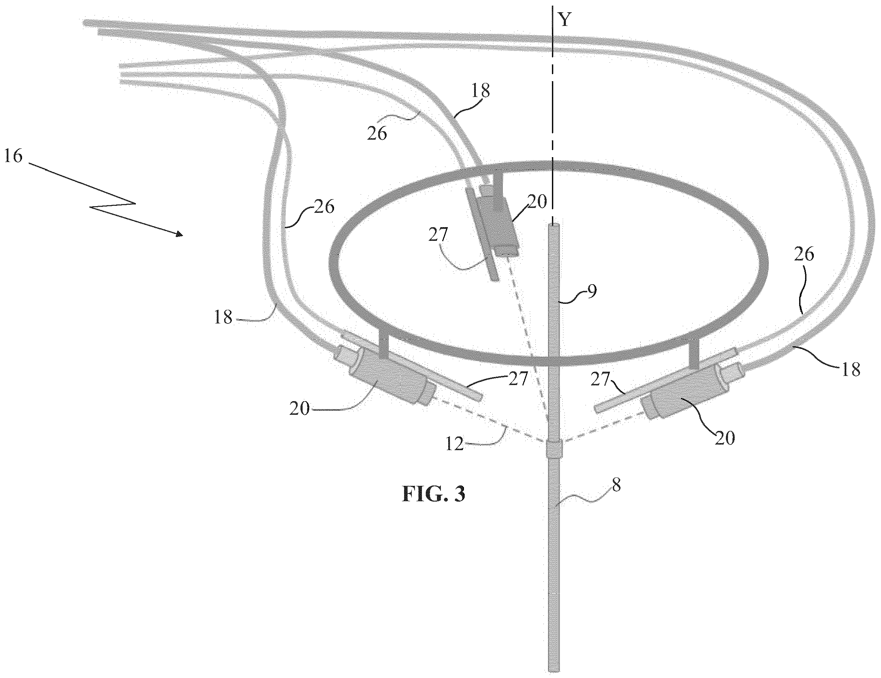

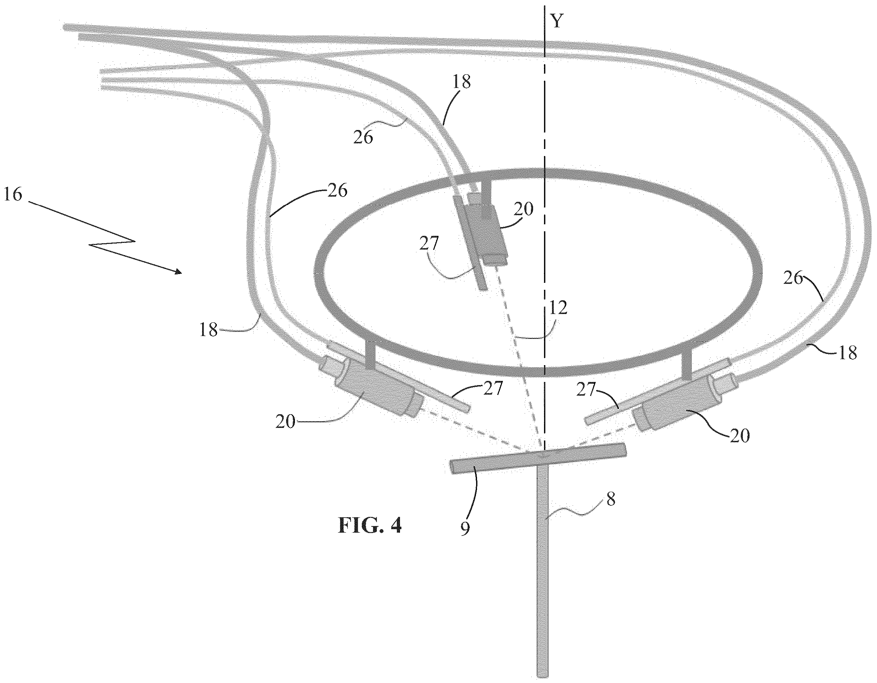

If the present method is employed in the assembly of finned-pack heat exchangers, the second component 9 has a tubular shape and is susceptible of being connected to the first component 8 according to a head-head junction, as in the case of the junctions of the small forks 5 with the return curved elements 6 and as illustrated in Figures 3 and 5-8, or according to a T-shaped junction, as in the case of the junctions between the tubular connectors and the manifolds 7 and as illustrated in Figure 4.

Advantageously, the first component 8 and the second component 9 are made of metal material comprising copper and, preferably, they are made of material constituted substantially entirely of copper, in particular non-oxidized copper.

Otherwise, one or both components 8, 9 can be made of stainless steel.

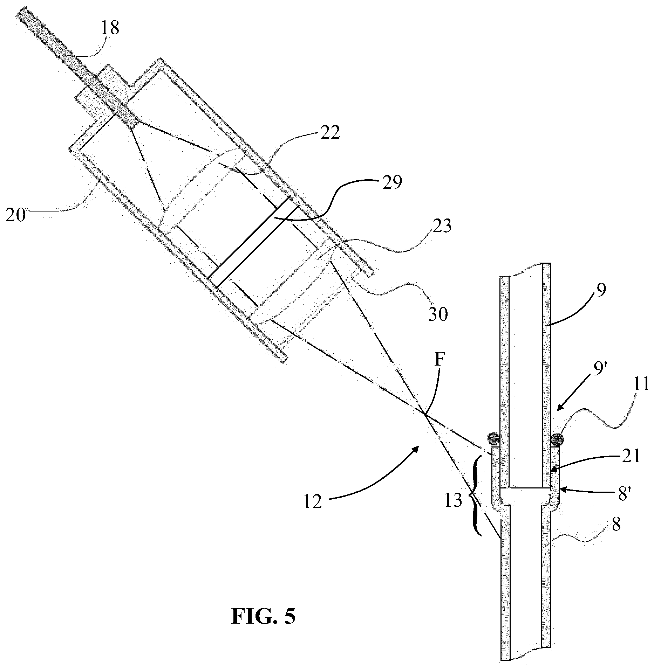

The method then comprises a step of arranging the first component 8 of tubular shape with its connection end 8' facing the connection portion 9' of the second component 9, defining with the latter a junction slit 21. In particular, if a head-head junction is attained between the two components 8 and 9, during the latter step the first component 8 can be arranged with a first end face thereof abutted against a second end face of the second component 9 and the junction slit 21 can be defined between the two end faces of the two components 8 and 9. More conveniently, the connection end 8' of the first component 8 and the connection portion 9' of the second component 9 can be susceptible of a shape coupling, as illustrated in the enclosed Figures 5-8 in which the connection portion 9' is adapted to be coaxially inserted in the connection end 8'. In the latter case, the junction slit 21 is defined between the facing lateral surfaces of the connection portion 9' and of the connection end 8'.

When instead a T-shaped junction is attained, the junction slit 21 is defined between the first end face of the first component 8 and the lateral surface of the connection portion 9' of the second component 9 facing thereto.

In addition, provision is made for a step of prearranging a bead 11 of filler material on the mouth of the junction slit 21. More in detail, the bead 11 can be advantageously associated with one of the two components 8 or 9 before the latter are coupled or it can be subsequently deposited on the mouth of the junction slit 21.

Advantageously, the filler material of the bead 11 is made of copper-based braze welding alloys.

The present brazing method comprises a step of irradiating, with at least one laser beam 12, at least one fraction of the connection end 8' of the first component 8 and/or at least one fraction of the connection portion 9' of the second component 9, defining an impact area 13 of the laser beam 12.

The bead 11 is positioned outside the aforesaid impact area 13 (and in particular completely outside the impact area 13), in a manner such that the laser beam 12 does not directly hit the bead 11 itself, involving the advantages described in detail hereinbelow. Advantageously, the aforesaid impact area 13 is defined on the connection end 8' of the first component 8, in accordance with the embodiments illustrated in Figures 5-8.

In accordance with a different embodiment, not illustrated in the enclosed figures, the impact area 13 is defined on the connection portion 9' of the second component 9.

In accordance with a further different embodiment, the impact area 13 is defined both on the connection end 8' of the first component 8 and on the connection portion 9' of the second component 9, of course without comprising the bead 11 at its interior, e.g. by means of the emission of two distinct laser beams, one hitting the connection end 8' and the other hitting the connection portion 9', defining two corresponding portions of the impact area 13 separated from each other by a non-irradiated area (not hit by the laser beams) where the bead 11 is extended.

Hereinbelow, reference will be made for the sake of simplicity to a single laser beam 12, it being intended nevertheless that the irradiating step can also be executed by means of multiple laser beams 12, as specified above, without departing from the protective scope defined by the present patent.

During the irradiating step, the laser beam 12 transmits thermal energy on the impact area 13, heating it (and hence heating the first component 8 and/or the second component 9 on which the impact area 13 itself is defined).

The present brazing method then comprises a step of transmitting, via conduction, the thermal energy from the impact area 13 to the bead 11 in order to heat the latter.

Provision is then made for a step of melting the filler material, in which the thermal energy, transmitted via conduction to the bead 11, at least partially melts the filler material of the bead 11 itself, in a manner such that the melted filler material penetrates via capillarity into said junction slit 21.

Such filler material penetrated into the junction slit 21, once solidified, determines the sealing of the junction slit 21 itself.

In this manner, the brazing method according to the present invention determines the melting of the filler material and the penetration of the latter into the junction slit 21 without the laser beam 12 hitting the bead 11 (the latter being outside the impact area 13 of the laser beam 12). This in particular allows melting the filler material without a part of the latter sublimating (being transformed into vapor), as instead occurs in the prior art solutions in which the laser beam directly hits the filler material. Consequently, the present method allows bringing to the melted state substantially the entire filler material of the bead 11 without substantial losses, therefore ensuring a complete filling of the junction slit 21 (without leaving holes inside the latter) and therefore ensuring the mechanical and hydraulic pressurized seal of the junction between the two components 8, 9.

According to the present invention the laser beam 12 has a power density at the impact area 13 comprised between 5 W/mm² and 400 W/mm² and preferably comprised between 50 W/mm² and 200 W/mm², if it operates in continuous regime, or it has a power density at the impact area 13 comprised between 100 W/mm² and 1000 W/mm² and preferably comprised between 100 W/mm² and 400 W/mm², if it operates in pulsed regime.

The power density of the laser beam 12, which impacts in the impact area 13 and which is comprised in the above-indicated range, allows heating the metal material of the first component 8 and/or of the second component 9 at the junction zone in rather brief times, nevertheless without damaging such components 8, 9, i.e. in particular without perforating them. Indeed, higher values of the power density could involve the removal of material in the impact area 13. Such material removal is entirely in the method in accordance with the present invention, in which the laser beam 12 is used as energy source having the sole object of heating the component 8 and/or 9.

On the other hand, lower values of power density would not ensure a sufficient supply of energy to the impact area 13 in order to efficiently heat it in industrially convenient times, i.e. on the order of several seconds or tens of seconds as a function of the size of the components 8 and 9 to be joined.

As indicated above, if the laser is employed in continuous regime, the power density of the laser beam 12 at the impact area 13 is on average lower than the power density provided if the laser beam 12 is employed in pulsed regime, given that in the latter case the energy supplied by the laser beam 12 to the impact area 13 is partially dissipated in the time interval between one impulse and the next.

Advantageously, the laser employed in the method in accordance with the present invention has wavelength comprised between 0.3 µm and 11 µm (and preferably between 0.3 µm and 5 µm) in order to be transportable by means of an optical fiber, with advantages attained as described hereinbelow. In particular, the employed laser preferably has a wavelength of about 1.07 µm. In particular, the laser employed in the present method can be suitably selected as a function for example of the efficiency of the source, of the efficiency of interaction between light and matter, of the costs or of other parameters that are deemed more pertinent for the specific application.

The above-indicated values of power density can be advantageously obtained by employing a laser having power comprised between 0.1 kW and 10 kW and preferably of about 2 kW.

In order to distribute the thermal energy supplied by the laser beam 12, and hence be able to develop in the first component 8 and/or in the second component 9 a quantity of heat sufficient for causing the melting of the bead 11 of filler material, the impact area 13 has high linear dimensions with respect to the conventional dimensions of the spot lasers, and in particular comprised between 2 mm and 40 mm and preferably comprised between 6 mm and 20 mm. Usually the impact area 13 has circular shape and diameter comprised in the above-indicated range.

An impact area 13 having the above-indicated size is in fact able to ensure a sufficient surface area of thermal exchange.

Advantageously, the impact area 13 is arranged in proximity to the bead 11 (given that the latter is outside the impact area 13 itself) preferably at a distance of at most several millimeters from the bead 11.

Advantageously, in order to obtain values of the power density comprised in the above-indicated intervals and an impact area 13 having the above-specified size characteristics, each laser beam 12 is non-focused at least on the impact area 13.

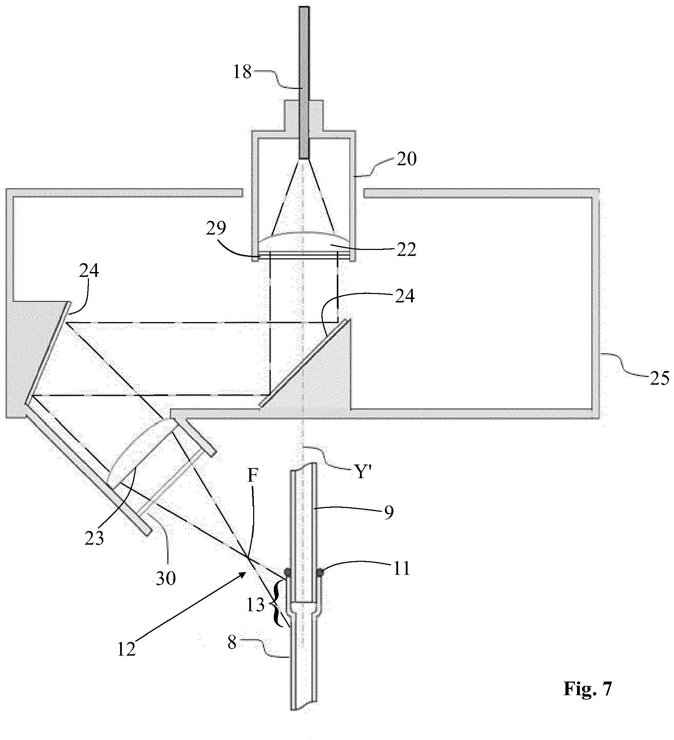

More in detail, in accordance with a first possible embodiment of the method according to the present invention in particular illustrated in the enclosed Figures 5 and 7, each laser beam 12 is focused in a specific focal plane thereof and intercepts the impact area 13 in a position that is spaced with respect to such focal plane. More in detail, the mean distance of the impact area 13 from the focus F of the focused laser beam 12 (intended as mean distance between the so-called "waist" of the focused laser beam 12 and each point of the impact area 13) is in such case advantageously comprised between 5 and 200 mm and preferably is comprised between 60 and 100 mm.

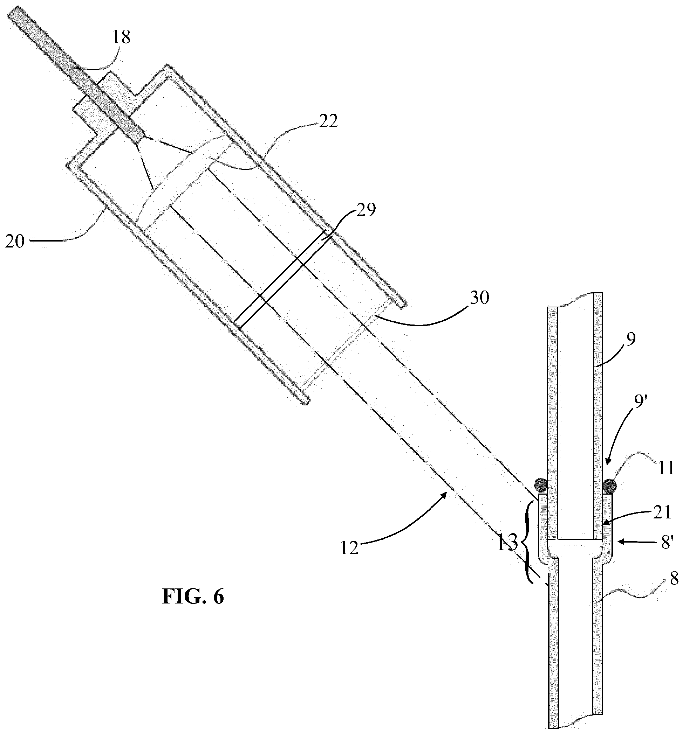

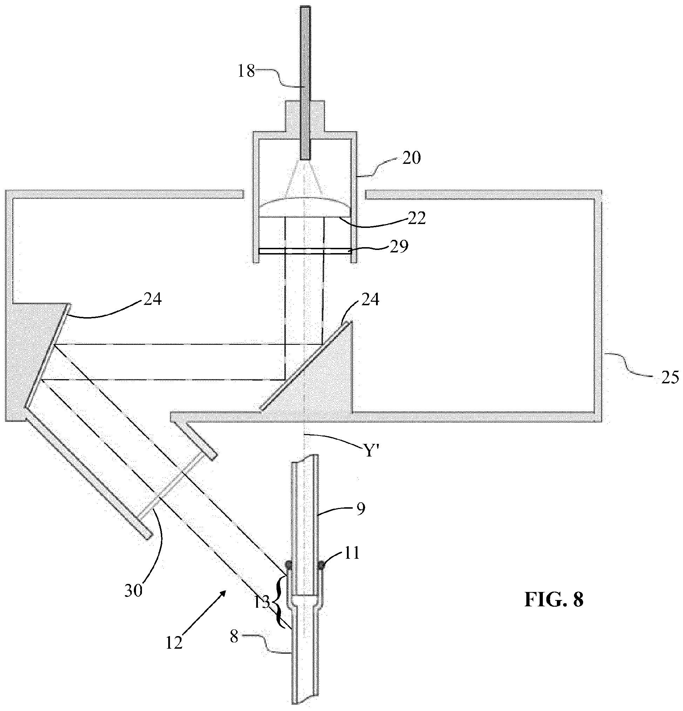

Otherwise, in accordance with a second possible embodiment of the method according to the present invention, each laser beam 12 is collimated and non-focused, as for example illustrated in the enclosed Figures 6 and 8. This allows simplifying the optics required in the device for emitting the laser beam 12, as better explained hereinbelow. Advantageously, during the irradiating step, the method comprises a step of surface oxidation of the impact area 13. In such oxidation step, the thermal energy transmitted by the laser beam 12 to the impact area 13 causes the formation of a metal oxide layer on the impact area 13 itself, and such oxide layer has greater emissivity than the metal material that constitutes the first component 8 and/or the second component 9. The formation of such metal oxide layer therefore determines an increase of the radiation absorbed by the impact area 13 and hence an increase of the thermal energy that is transmitted by the laser beam 12 to the impact area 13 itself and that, in the transmitting step, is transmitted via conduction to the bead 11 of filler material.

Advantageously, if the first component 8 and/or second component 9, on which the impact area 13 is defined, is made of copper, in the aforesaid oxidation step the laser beam 12 causes the formation of cupric oxide (CuO) and/or of cuprous oxide (Cu₂O) on the impact area 13.

In particular, based on theoretical calculations and experimental studies, it was established that in the emission conditions of the laser beam 12 according to the invention, the emissivity of the metallic copper (of the first component 8 and/or of the second component 9) is about 0.1 (i.e. only about 10% of the radiation of the laser beam 12 is absorbed while the remaining 90% is reflected and therefore does not transmit thermal energy to the impact area 13).

It is also estimated that copper oxide, which is generated on the impact area in the oxidation step, has an emissivity comprised between about 0.70 and 0.85, consequently determining an absorption of 70-85% of the radiation of the laser beam 12 by the impact area 13, therefore allowing the laser beam 12 to transmit, to the first component 8 and/or to the second component 9, a quantity of thermal energy much greater than the metallic copper without oxide layer.

Advantageously, the generation of a metal oxide layer on the impact area 13, and the consequent increase of emissivity of the material of the first component 8 and/or of the second component 9 (on which the impact area 13 is defined), allows more quickly transmitting a greater quantity of thermal energy to the first component 8 and/or to the second component 9 and therefore allows transmitting a greater thermal energy to the metallic bead 11. Given the same power of the laser beam 12, this allows melting the filler material of the bead 11 in less time, with consequent energy savings.

In addition, the actuation of the oxidation step of the present method allows performing the brazing without having to employ components 8, 9 of pre-oxidized material.

Preferably, in the oxidation step, the laser beam 12 is set with a frequency and/or power modulation such to generate the growth of a coherent layer of metal oxide. Such growth of the coherent layer of metal oxide prevents the cracking into chips via thermal shock of the oxide itself, and therefore it prevents the formation of air cracks, which would reduce the transmission of the thermal energy.

Advantageously, the oxidation step is actuated in an initial interval of the irradiating step.

In particular, the oxidation step has a duration not greater than about ten seconds and preferably not greater than about 6-7 seconds.

Suitably, the oxidation step lasts until the metal oxide layer reaches a maximum thickness (e.g. of about 20-50 nm), beyond which there is no longer migration of oxygen to the metal.

Preferably, the oxidation step occurs in atmosphere containing oxygen, and in particular containing air.

Advantageously, the step of melting the filler material of the bead 11 commences after the start of the irradiating step and in particular after the start of the oxidation step, after which the quantity of thermal energy, transferred via conduction from the impact area 13 to the bead 11, is sufficient for bringing the temperature of the filler material of the bead 11 itself above the melting temperature.

Advantageously, at the end of the oxidation step, the melting step is obtained in inert atmosphere in order to prevent the formation of pores or non-metallic inclusions on the brazed joint, which would compromise the mechanical strength and thermal fatigue strength of the joint itself. For such purpose, at the end of the oxidation step, it is provided to insufflate an inert gas at least at the bead 11, in order to evacuate the oxygen of the air, in the presence of which the oxidation step is attained.

Preferably, during the oxidation step, the laser beam 12 is emitted in pulsed regime.

Advantageously, during the irradiating step, at the end of the oxidation step, the power of the laser beam 12 is increased in order to consequently increase the transmission of thermal energy to the impact area 13 and then to the bead 11, in a manner such to melt the filler material of the bead 11 itself in the shortest possible time.

Preferably, during the irradiating step, at the end of the oxidation step, the laser beam 12 is emitted in continuous regime.

The duration of the irradiating step is advantageously established as a function of the type of material with which the components 8, 9 to be joined are made, i.e. as a function of the specific capacity of the latter to absorb the thermal energy supplied by the laser beam 12. The irradiating step is in any case extended for a sufficient time such that the components 8, 9 to be joined absorb, from the laser beam 12, the quantity of thermal energy necessary to cause a suitable heating thereof and to cause the consequent melting of the filler material of the bead 11.

Advantageously, the method in accordance with the present invention is adapted to be employed for joining by means of brazing components made of metal material, in particular high-reflective metals and alloys, such as preferably copper and stainless steel. In particular, if at least one from between the first component 8 and the second component 9 (on which the impact area 13 is defined) is made of a high-reflective material, the oxidation step is advantageously extended for a time interval greater than the interval of time necessary for the surface layer of the high-reflective material in the impact area 13 irradiated by the laser beam 12 to be oxidized, in accordance with the above-described advantageous oxidation step.

Indeed, as discussed above, as long as the high-reflective material is not covered by an oxidized surface layer, it is characterized by a greater power of reflection of the laser beam 12 with respect to the absorption power, such that it is unable to absorb a quantity of energy sufficient to ensure the development of the heat necessary for melting the bead 11. Following the formation of an oxide layer on its surface, the absorption power of the high-reflective material increases, negatively affecting its reflection power, and thus a quantity of heat sufficient for allowing the melting of the bead 11 is developed. Advantageously, the method in accordance with the present invention is adapted to be employed for joining by means of brazing components made of low-reflective metals and alloys, such as metals provided with a surface layer of oxide. In particular, in case of metals provided with an oxide surface layer, the aforesaid oxidation step is not provided. Preferably, if at least one from between the first component 8 and the second component 9 (on which the impact area 13 is defined) is made of a low-reflective material, such as a metal material provided with an oxide surface layer, the irradiating step can be extended for a time interval that is shorter than the interval of irradiation time required if one or more of the components is made of a high-reflective material, given the greater capacity of the low-reflective materials to absorb the energy supplied by the laser beam and hence their greater heating speed.

In accordance with a preferred embodiment of the method according to the present invention, the laser beam 12 has a power distribution over the area of its cross section which approximates a so-called "top-hat" footprint.

In order to heat the impact area 13 as uniform as possible, it is in fact preferable that the power distribution of the laser beam 12 is as uniform as possible over the entire impact area 13. The "top-hat" footprint is characterized by a profile with substantially uniform intensity and by sudden transition regions and is thus able to ensure a good uniformity of the power density of the beam over the entire surface hit by the light spot.

A profile which approximates a top-hat profile as much as possible is therefore preferably to a profile which approximates a Gaussian profile, without however excluding that a profile of the latter type can be employed in the actuation of the method according to the invention.

The optimal heating of the impact area 13, ensured by the irradiation with laser beam 12 having the above-specified characteristics, is indispensable for ensuring the excellence of the brazing joint.

The method according to the present invention therefore allows coherently heating the joint and consequently obtaining a brazing substantially lacking inclusions, pores or defects in general and therefore provided with optimal sealing characteristics, even under pressure, and optimal thermal fatigue strength characteristics. As specified above, such characteristics of the brazed joints are indispensable in some application contexts and for example in the case of joints in the hydraulic circuit of finned-pack heat exchangers.

The present method for example allows performing brazing between copper components, or brazing of copper on stainless steel, or brazing between stainless steel components. Also forming an object of the present invention is a system 1 for performing brazing in particular by means of a method of the above-described type, regarding which the same reference numbers will be maintained hereinbelow.

The system 1 according to the present invention comprises at least one robot 14 provided with one or more movement arms 15, each comprising a plurality of elements 15', termed links in the technical jargon of the field, connected to each other by means of kinematic joints 15", termed joints in the technical jargon of the field. The robot 14 is also provided with one or more operating heads 16, each comprising one or more emitting devices 20 of a laser beam 12, supported by a corresponding movement arm 15 and movable thereby.

In accordance with the preferred embodiment illustrated in the enclosed figures, the system 1 comprises a robot 14, provided with only one movement arm 15 and with only one operating head 16 connected thereto.

Advantageously, the robot 14 can be provided with any one combination of main joints for the precise spatial positioning, with respect to the work zone, of the operating head 16. In addition, the robot 14 can be provided with one or more secondary joints for the precise spatial orientation, with respect to the work zone, of the operating head 16, allowing yawing, rolling and pitching of the head 16.

The robot 14 is susceptible of positioning the operating head 16 in the pre-selected work points in order to direct the laser energy to the points to be brazed. The robot 14 is essential for the automation of the brazing method, for example of a complete exchanger as well as for the brazing of the single curved elements 6 of connection to the small forks 5. The orientation of the operating head 16 on suitable paths is in fact essential for allowing the execution of such brazing method. For this task, the robot 14 is advantageously a multi-axis interpolated with at least three main joints for the spatial positioning of the operating head 16 and three secondary joints for the orientation thereof. In addition to the anthropomorphic robots, the different types of industrial robots, such as Cartesian, cylindrical, spherical and SCARA robots, are suitable for the task as long as they are complete with orientation wrist (secondary joints).

The system 1 also comprises one or more laser sources 17 and preferably a single laser source 17, connected to the operating head 16 by means of one or more optical transport fibers 18 in order to supply the emitting device 20 (or emitting devices 20) of the operating head 16 with at least one laser beam 12. The laser source 17 can be of any desired type, as long as it is adapted to allow the emission, through the emitting device 20, of a laser beam 12 having the previously specified characteristics.

The transport of the laser beam by means of the optical fiber 18 allows maintaining the laser source 17 spaced, and hence protected, from the work zone, yet still bringing the emission point of the laser beam 12 very close to the work zone.

Advantageously, the optical fiber 18 which connects the source 17 - preferably arranged in fixed position - to the operating head 16 has a length sufficiently long for ensuring a suitable work mobility of the operating head 16.

The system is advantageously provided, at its operating head 16, with a first operating zone in which the connection end 8' of the first component 8 and/or the connection portion 9' of the second component 9 is intended to be arranged, with the connection end 8' facing the connection portion 9', defining with the latter the junction slit 21.

In addition, the system is provided with a second operating zone extended completely outside said first work zone and advantageously adjoining the latter. In the aforesaid second operating zone, the bead 11 of filler material is intended to be positioned, prearranged on the mouth of the junction slit 21.

The system 1 is also provided with a programmable control unit 19 which is connected to the robot 14 in order to control at least the movement of the operating head 16, and it is also operatively connected to the emitting device 20 (or to the emitting devices 20) in order to drive the emission of the laser beam 12.

Advantageously, the programmable control unit 19 is also prearranged for managing the laser beam 12, modifying the process parameters thereof.

According to the invention, the programmable control unit 19 is prearranged in order to drive the emitting device 20 to irradiate, with the laser beam 12, the connection end 8' of the first metal component 8 and/or the connection portion 9' of the second metal component 9 on an impact area 13 extended inside the aforesaid first operating zone and outside the aforesaid second operating zone in which the bead 11 is intended to be arranged, in a manner such that the laser beam 12 does not directly hit the bead 11 itself. Advantageously, the programmable control unit 19 is set to ensure that the robot 14 completes a desired brazing cycle, for example by moving the operating head 16 with respect to the components 8 and 9 for performing the junction brazing therebetween and/or for example by spatially moving the operating head 16 such that the latter reaches further components to be joined.

The system 1 according to the present invention is therefore extremely versatile, since it allows executing the brazing of junctions between components with size even quite different from each other and spatially arranged according to any desired geometry, given that for such purpose it will suffice to program the control unit 19.

According to the present invention, the programmable control unit 19 is prearranged in order to drive the emitting device 20 of the operating head 16 of the system 1 to emit the laser beam 12 with a power density, at the impact area 13, comprised between 5 W/mm² and 400 W/mm² operating in continuous regime or comprised between 100 W/mm² and 1000 W/mm² operating in pulsed regime.

Each emitting device 20 comprises in particular the optical devices necessary for adapting the laser beam 12 in accordance with the desired characteristics.

More in detail, in accordance with a first embodiment thereof, illustrated in the enclosed

Figures 5 and 7, the emitting device 20 comprises at least one collimation lens 22 and at least one focusing lens 23 and is susceptible to be positioned and moved, integral with the operating head 16, by the robot 14 to a distance from the components 8 and 9 to be joined such to allow the definition of the impact area 13 on at least one of these, with the characteristics of power density of the laser beam 12 and of distance from the focus F of the beam 12 as specified above.

In accordance with a second embodiment thereof, illustrated in the enclosed Figures 6 and 8, the emitting device 20 only comprises a collimation 22, i.e. it does not comprise focusing lenses and it is susceptible to emit a non-focused laser beam 12.

The emitting device 20 can advantageously comprise, in both above-indicated embodiments, also a beam shaping optical device 29, so-called "beam shaper", in order to obtain a power distribution on the area of the cross section of the beam 12 which approximates a "top-hat" footprint.

More in detail, such beam shaping optical device 29 can be interposed between the collimation lens 22 and a protection element 30, made of glass or polycarbonate for example, placed to close the housing of the emitting device 20 that receives at its interior the optical devices for shaping the laser beam, in order to protect the latter from external agents. If the emitting device 20 also comprises one or more focuses lenses 23, like in the first embodiment illustrated in the enclosed Figures 5 and 7, the beam shaping optical device 29 can be advantageously interposed between the collimation lens 22 and the focusing lens 23.

Figures 3 and 4 schematically illustrate a first possible embodiment of the operating head 16, also illustrated in Figure 1. In accordance with such embodiment, the operating head 16 comprises a plurality of emitting devices 20 of a laser beam 12 arranged spaced from each other around a rotation axis Y of the operating head 16 itself.

Such configuration of the operating head 16 allows irradiating the impact area 13 in a more uniform manner, hence to facilitate the substantially uniform heating thereof.

It was in fact verified that by simultaneously irradiating the impact area 13 from multiple angles facilitates the absorption of thermal energy and hence the development heat.

The emitting devices 20 can all be connected to a same laser source 17, or they can each be connected to a corresponding laser source 17 thereof.

The emitting devices 20 can be arranged equidistant from each other, as illustrated in the enclosed figures, or they can otherwise define different angles therebetween if this assists in better reaching the junction zone between the joints, also as a function of the accessibility thereof.

The mutual angular position of the emitting devices 20 can also be adjustable and be advantageously controlled by means of the programmable control unit 19. Advantageously, the operating head 16 can be susceptible of oscillating around the axis Y in opposite rotation directions. In fact this would allow easily hitting the entire impact area 13 with the laser beam 12.

For example, if the operating head 16 is provided with three emitting devices 20 as illustrated in the enclosed figures, it can be controlled to rotate around the axis Y by an angle of 60° in an alternated manner in the two rotation directions, such that the laser beams 12 emitted by the three devices 20 would be able to irradiate the entire impact area 13. The operating head 16 can be oscillated even if it comprises only one emitting device 20.

In accordance with a second possible embodiment thereof illustrated in Figures 7 and 8, the operating head 16 is a galvanometric head. The latter comprises a single emitting device 20 and a box-like structure 25 for moving the laser beam 12, in which a plurality of reflection mirrors 24 are housed. The latter are susceptible of being moved with the box-like structure 25 with low inertia and with high dynamics around an axis Y', allowing a quick spatial movement of the beam 12. Due to the galvanometric head, it is for example possible to quickly move the beam 12 around the entire impact area 13, facilitating a uniform heating of the latter.

Advantageously, the system 1 also comprises one or more ducts 26 for supplying an inert gas, such as nitrogen, to the operating head 16 and, more in detail, to each of the emitting devices 20. Such supply ducts 26 are in particular connected, each at a distal end thereof to an insufflating nozzle 27 associated with a corresponding emitting device 20 and are susceptible of being connected at the proximal end thereof to a tank 28 of the aforesaid inert gas.

The invention thus conceived therefore attains the pre-established objects.

## Claims

1. Brazing method for joining two metal components, such method comprising the following operating steps:
- a step of prearranging a first metal component (8) provided with a connection end (8') and a second metal component (9) provided with a connection portion (9'), at least said first component (8) having tubular shape;
- a step of arranging said first component (8) of tubular shape with said connection end (8') facing the connection portion (9') of said second component (9) defining with the latter a junction slit (21);
- a step of prearranging a bead (11) of filler material on the mouth of said junction slit (21);
said brazing method being **characterized in that** it further comprises:
- a step of irradiating, with at least one laser beam (12), at least one fraction of the connection end (8') of said first component (8) and/or at least one fraction of the connection portion (9') of said second component (9), defining an impact area (13) of said at least one laser beam (12), such laser beam (12) transmitting thermal energy on said impact area (13);
said at least one laser beam (12) having a power density at said impact area (13) between 5 W/mm² and 400 W/mm² operating in continuous regime, or between 100 W/mm² and 1000 W/mm² operating in pulsed regime;
in said irradiating step, said bead (11) being outside said impact area (13);
- a step of transmitting, via conduction, said thermal energy from said impact area (13) to said bead (11);
- a step of melting said filler material, and in such melting step said thermal energy, transmitted via conduction to said bead (11), at least partially melts the filler material of said bead (11), such melted filler material penetrating via capillarity in said junction slit (21).

2. Brazing method according to claim 1, **characterized in that**, during said irradiating step, said method comprises a step of surface oxidation of said impact area (13), and in such oxidation step the thermal energy transmitted by said laser beam (12) to said impact area (13) causes the formation of a metal oxide layer on said impact area (13).

3. Brazing method according to claim 2, **characterized in that** said oxidation step occurs in a first atmosphere containing oxygen.

4. Brazing method according to claim 3, **characterized in that** at the end of said oxidation step, said melting step occurs in a second inert atmosphere.

5. Brazing method according to any one of the preceding claims from 2 to 4, **characterized in that** said oxidation step has a duration not greater than about ten seconds.

6. Brazing method according to any one of the preceding claims from 2 to 5, **characterized in that** during said oxidation step said laser beam (12) is emitted in pulsed regime.

7. Brazing method according to any one of the preceding claims, **characterized in that** said first component (8) and/or said second component (9) is made of non-oxidized copper.

8. Brazing method according to any one of the preceding claims, **characterized in that** said impact area (13) has linear dimensions comprised between 2 mm and 40 mm.

9. The brazing method according to any one of the preceding claims, **characterized in that** said at least one laser beam (12) is non-focused at least on said impact area (13).

10. The brazing method according to claim 9, **characterized in that** said at least one laser beam (12) is collimated and non-focused.

11. The brazing method according to claim 9, **characterized in that** said at least one laser beam (12) is focused and the mean distance of said impact area (13) from the focus (F) of said at least one focused laser beam (12) is between 5 mm and 200 mm.

12. The brazing method according to any of the previous claims, **characterized in that** said at least one laser beam (12) has a power distribution on the area of its cross section which approximates a "top-hat" footprint.

13. System for performing brazing, such system comprising a first component (8) and a second component (9) to be joined to the first component (8), and
- at least one robot (14) provided with at least one movement arm (15) and with at least one operating head (16), which comprises at least one device (20) for emitting a laser beam (12), is supported by said movement arm (15) and is movable thereby;
- at least one laser source (17) connected to said operating head (16) by means of at least one optical transport fiber (18) in order to supply said at least one emitting device (20) of said operating head (16) with at least one laser beam (12);
- a first operating zone in which a connection end (8') of the first component (8) and/or a connection portion (9') of the second component (9) is intended to be arranged, with said connection end (8') facing said connection portion (9'), defining with the latter a junction slit (21);
- at least one programmable control unit (19) connected to said at least one robot (14) in order to control at least the movement of said operating head (16) and operatively connected to said emitting device (20) in order to drive the emission of said laser beam (12);
said system being **characterized in that** it further comprises:
- a second operating zone extended completely outside said first operating zone and in which a bead (11) of filler material is intended to be positioned, prearranged on the mouth of said junction slit (21);
said programmable control unit (19) being prearranged in order to drive said emitting device (20) to irradiate, with said laser beam (12), the connection end (8') of said first metal component (8) and/or the connection portion (9') of said second metal component (9) on an impact area (13) extended inside said first operating zone and outside said second operating zone in which said bead (11) is intended to be arranged;
said programmable control unit (19) being prearranged in order to drive said emitting device (20) to emit said laser beam (12) with a power density, at said impact area (13), between 5 W/mm² and 400 W/mm² in continuous regime or between 100 W/mm² and 1000 W/mm² in pulsed regime.

14. System for performing brazing according to claim 13, **characterized in that** said operating head (16) comprises a plurality of devices (20) for emitting a laser beam arranged spaced from each other around a rotation axis (Y) of said operating head (16) and around said first operating zone.

15. System for performing brazing according to claim 14, **characterized in that** said operating head (16) is susceptible of oscillating around said axis (Y) in opposite rotation directions.

## Patentansprüche

1. Lötverfahren zur Verbindung von zwei Metallbauteilen, das folgende Arbeitsphasen umfasst:
- eine Vorbereitungsphase eines ersten Metallbauteils (8), der über ein Verbindungsende (8') verfügt und eines zweiten Metallbauteils (9), der über ein Verbindungsteil (9') verfügt, wobei der genannte erste Bauteil eine Schlauchform hat;
- eine Anordnungsphase dieses ersten schlauchförmigen Bauteils (8), wobei das genannte Verbindungsende (8') dem Verbindungsteil (9') dieses genannten zweiten Bauteils (9) zugewandt ist und mit Letzterem einen Verbindungsspalt (21) bildet;
- eine Vorbereitungsphase eines Randes (11) aus Zufuhrmaterial auf die Öffnung dieses Verbindungsspalts (21);
wobei dieses Lötverfahren außerdem **dadurch gekennzeichnet ist, dass**:
- eine Bestrahlungsphase mit mindestens einem Laserstrahl (12) von einem Teil des Verbindungsendes (8') dieses ersten Bauteils (8) und/oder von mindestens einem Teil des Verbindungsteils (9') des zweiten Bauteils, wobei eine Aufprallfläche (13) des Laserstrahls definiert wird, der auf diese Aufprallfläche (13) thermische Energie übermittelt;
wobei dieser Laserstrahl (12) eine Leistungsdensität in Korrespondenz mit der Aufprallfläche (13) zwischen 5 W/mm² und 400 W/mm² bei dauernder Funktionsweise oder zwischen 100 W/mm² und 1000 W/mm² mit impulsierter Funktionsweise hat; wobei bei dieser Bestrahlungsphase der Rand (11) sich außerhalb der Aufprallfläche (13) befindet;
- eine Übermittlungsphase mittels Leitung der thermischen Energie von der Aufprallfläche an den Rand (11);
- eine Schmelzphase des Zufuhrmaterials, bei der die thermische Energie, welche mittels Leitung an den Rand (11) übermittelt wird, das Zufuhrmaterial des Rands (11) teilweise zum Schmelzen bringt, wobei das geschmolzene Zufuhrmaterial mittels Kapillarität in den genannten Verbindungsspalt (21) eindringt.

2. Lötverfahren nach Anspruch 1, das **dadurch gekennzeichnet ist, dass** während der Bestrahlungsphase das genannte Verfahren eine oberflächliche Oxydationsphase der Aufprallfläche (13) umfasst, bei der die vom Laserstrahl (12) zu der Aufprallfläche (13) übermittelte Energie die Bildung eines metallischen Oxydsubstrats auf diese Aufprallfläche (13) bestimmt.

3. Lötverfahren nach Anspruch 2, **dadurch gekennzeichnet, dass** diese Oxydationsphase in einer Sauerstoff enthaltenden Atmosphäre erfolgt.

4. Lötverfahren nach Anspruch 3, **dadurch gekennzeichnet, dass** am Ende der Oxydationsphase die Schmelzphase in einer Schutzatmosphäre erfolgt.

5. Lötverfahren nach einer der vorigen Ansprüche von 2 bis 4, **dadurch gekennzeichnet, dass** diese Oxydationsphase nicht länger als 10 Sekunden dauert.

6. Lötverfahren einer der vorigen Ansprüche von 2 bis 5, **dadurch gekennzeichnet, dass** während dieser Oxydationsphase der Laserstrahl (12) in impulsierter Form ausgestrahlt wird.

7. Lötverfahren nach einer der vorigen Ansprüche, **dadurch gekennzeichnet, dass** der erste Bauteil (8) und/oder zweite Bauteil (9) aus nicht oxydiertem Kupfer besteht.

8. Lötverfahren einer der vorigen Ansprüche, **dadurch gekennzeichnet, dass** die Aufprallfläche (13) lineare Dimensionen zwischen 2 mm und 40 mm aufweist.

9. Lötverfahren nach einer der vorigen Ansprüche, **dadurch gekennzeichnet, dass** mindestens ein Laserstrahl (12) nicht auf die Aufprallfläche (13) fokussiert ist.

10. Lötverfahren nach Anspruch 9, **dadurch gekennzeichnet, dass** mindestens ein Laserstrahl (12) kollimiert und nicht fokussiert ist.

11. Lötverfahren nach Anspruch9, **dadurch gekennzeichnet, dass** mindestens ein Laserstrahl (12) fokussiert ist und die durchschnittliche Distanz der genannten Aufprallfläche vom Brennpunkt (F) des genannten fokussierten Laserstrahls (12) sich zwischen 5 mm und 200 mm beläuft.

12. Lötverfahren nach einer der vorigen Ansprüche, **dadurch gekennzeichnet, dass** mindestens ein Laserstrahl (12) eine Leistungsverteilung auf die Fläche des eigenen Querschnitts aufweist, die sich einem "top-hat" nähert.

13. Anlage zur Herstellung von Löten, umfassend einen ersten (8) und einen zweiten Bauteil (9), der mit der ersten Komponente (8) zu verbinden ist, und
- mindestens einen Roboter (14), der über einen Bewegungsarm (15) und einen Betriebskopf (16) verfügt, der mindestens ein Ausstrahlgerät (20) eines Laserstrahls (12) umfasst, durch diesen Bewegungsarm (15) gestützt wird und von diesem auch bewegt wird;
- mindestens eine Laserquelle (17), die mit dem genannten Betriebskopf (16) durch mindestens eine Transportglasfaser (18) verbunden ist, um diesem Ausstrahlgerät (20) des genannten Betriebskopfs (16) mindestens einen Laserstrahl (12) anzuführen;
- einen ersten Betriebsbereich, in dem ein Verbindungsende (8') des ersten Bauteils (8) und/oder ein Verbindungsteil (9') des zweiten Bauteils (9), dazu bestimmt ist, mit diesem Verbindungsende (8') dem genannten Verbindungsteil (9') zugewandt angeordnet zu werden und dabei einen Verbindungsspalt (21) bildet;
- mindestens eine programmierbare Kontrolleinheit (19), die mit dem genannten mindestens eine Robot (14) verbunden ist, um die Bewegung des Betriebskopfes (16) und operativ mit dem betreffenden Ausstrahlgerät (20) verbunden, um die Ausstrahlung des Laserstrahls (12) zu kontrollieren;
wobei diese Anlage zudem **dadurch gekennzeichnet ist, dass** es Folgendes umfasst:
- einen zweiten Betriebsbereich, der sich vollständig außerhalb des ersten Betriebsbereichs erstreckt und in der der Rand (11) aus Zufuhrmaterial auf die Öffnung des genannten Verbindungsspalts (21) positioniert werden muss;
wobei diese programmierbare Kontrolleinheit (19) dazu bestimmt ist, das betreffende Ausstrahlgerät (20) zu lenken, um mit dem Laserstrahl (12) das Verbindungsende (8') des ersten Metallbauteils (8) und/oder die Verbindungsportion (9') des zweiten Metallbauteils (9) auf eine Aufprallfläche (13) zu bestrahlen, wobei sie sich innerhalb dieses ersten Arbeitsbereichs und außerhalb des zweiten Arbeitsbereichs, in welchem der Rand (11) angeordnet wird, erstreckt;
wobei diese programmierbare Kontrolleinheit (19) dazu bestimmt ist, das genannte Ausstrahlgerät (20) zu lenken, um einen Laserstrahl (12) mit Leistungsdensität in Korrespondenz der Aufprallfläche (13) zwischen 5 W/mm² und 400 W/mm² im Dauerzustand und zwischen 100 W/mm² und 1000 W/mm² im impulsierten Zustand auszustrahlen.

14. Anlage zur Herstellung von Löten nach Anspruch 13, **dadurch gekennzeichnet, dass** der betreffende Betriebskopf (16) eine Mehrzahl von Ausstrahlgeräten (20) eines Laserstrahls umfasst, die untereinander distanziert um die Y-Rotationsachse des betreffenden Betriebskopfes (16) und um den genannten ersten Betriebsbereichs angeordnet sind.

15. Anlage zur Herstellung von Löten nach Anspruch 14, **dadurch gekennzeichnet, dass** der Betriebskopf (16) in den entgegengesetzten Rotationsrichtungen um die genannte Y-Achse schwenken kann.

## Revendications

1. Procédé de brasage pour braser deux composants métalliques, ledit procédé comprenant les phases opérationnelles suivantes :
- une phase de prédisposition d'un premier composant (8) métallique muni d'une extrémité de liaison (8') et d'un second composant (9) métallique muni d'une portion de liaison (9'), au moins ledit premier composant (8) ayant une forme tubulaire ;
- une phase de disposition dudit premier composant (8) de forme tubulaire avec ladite extrémité de liaison (8') placée en face de la portion de liaison (9') dudit second composant (9) définissant avec cette dernière une fente de brasage (21) ;
- une phase de prédisposition d'un cordon (11) de matériau d'apport sur l'entrée de ladite fente de brasage (21) ;
ledit procédé de brasage étant **caractérisé en ce qu'**il comprend également :
- une phase de rayonnement, avec au moins un faisceau laser (12), d'au moins une fraction de l'extrémité de liaison (8') dudit premier composant (8) et/ou d'au moins une fraction de la portion de liaison (9') dudit second composant (9), définissant une zone d'impact (13) dudit au moins un faisceau laser (12), ledit faisceau laser (12) transmettant de l'énergie thermique sur ladite zone d'impact (13) ;
ledit au moins un faisceau laser (12) ayant une densité de puissance au niveau de ladite zone d'impact (13) comprise entre 5 W/mm² et 400 W/mm² avec un fonctionnement en régime continu ou comprise entre 100 W/mm² et 1 000 W/mm² avec un fonctionnement en régime impulsionnel ;
dans ladite phase de rayonnement, ledit cordon (11) étant extérieur à ladite zone d'impact (13) ;
- une phase de transmission, par conduction, de ladite énergie thermique de ladite zone d'impact (13) audit cordon (11) ;
- une phase de fusion dudit matériau d'apport, dans laquelle ladite énergie thermique, transmise par conduction audit cordon (11), porte à fusion, au moins partiellement, le matériau d'apport dudit cordon (11), ledit matériau d'apport fondu pénétrant par capillarité dans ladite fente de brasage (21).

2. Procédé de brasage selon la revendication 1, **caractérisé en ce que**, pendant ladite phase de rayonnement, ledit procédé comprend une phase d'oxydation superficielle de ladite zone d'impact (13), durant laquelle l'énergie thermique transmise par ledit faisceau laser (12) à ladite zone d'impact (13) détermine la formation d'une couche d'oxyde métallique sur ladite zone d'impact (13).

3. Procédé de brasage selon la revendication 2, **caractérisé en ce que** ladite phase d'oxydation a lieu dans une première atmosphère contenant de l'oxygène.

4. Procédé de brasage selon la revendication 3, **caractérisé en ce qu'**à la fin de ladite phase d'oxydation, ladite phase de fusion a lieu dans une seconde atmosphère inerte.

5. Procédé de brasage selon l'une des revendications précédentes de 2 à 4, **caractérisé en ce que** ladite phase d'oxydation a une durée non supérieure à dix secondes environ.

6. Procédé de brasage selon l'une des revendications précédentes de 2 à 5, **caractérisé en ce que**, pendant ladite phase d'oxydation, ledit faisceau laser (12) est émis en régime impulsionnel.

7. Procédé de brasage selon l'une des revendications précédentes, **caractérisé en ce que** ledit premier composant (8) et/ou ledit second composant (9) est en cuivre non oxydé.

8. Procédé de brasage selon l'une des revendications précédentes, **caractérisé en ce que** ladite zone d'impact (13) a des dimensions linéaires comprises entre 2 mm et 40 mm.

9. Procédé de brasage selon l'une des revendications précédentes, **caractérisé en ce que** ledit au moins un faisceau laser (12) n'est pas focalisé au moins sur ladite zone d'impact (13).

10. Procédé de brasage selon la revendication 9, **caractérisé en ce que** ledit au moins un faisceau laser (12) est collimaté et non focalisé.

11. Procédé de brasage selon la revendication 9, **caractérisé en ce que** ledit au moins un faisceau laser (12) est focalisé et la distance moyenne de ladite zone d'impact (13) du point focal (F) dudit au moins un faisceau laser (12) focalisé est comprise entre 5 mm et 200 mm.

12. Procédé de brasage selon l'une des revendications précédentes, **caractérisé en ce que** ledit au moins un faisceau laser (12) a une distribution de puissance sur la zone de sa section transversale proche d'un profil « top-hat ».

13. Système pour la réalisation de brasages, ledit système comprenant un premier composant (8) et un second composant (9) à relier au premier composant (8), et
- au moins un robot (14) muni d'au moins un bras d'actionnement (15) et d'au moins une tête opérationnelle (16) comprenant au moins un dispositif d'émission (20) d'un faisceau laser (12), supportée par ledit bras d'actionnement (15) et mise en mouvement par ce dernier ;
- au moins une source laser (17) reliée à ladite tête opérationnelle (16) à travers au moins une fibre optique (18) de transport pour fournir audit au moins un dispositif d'émission (20) de ladite tête opérationnelle (16) au moins un faisceau laser (12) ;
- une première zone opérationnelle où une extrémité de liaison (8') du premier composant (8) et/ou une portion de liaison (9') du second composant (9) est destinée à être disposée avec ladite extrémité de liaison (8') placée en face de ladite portion de liaison (9'), définissant avec cette dernière une fente de brasage (21) ;
- au moins une unité de commande programmable (19) reliée audit au moins un robot (14) pour contrôler au moins le mouvement de ladite tête opérationnelle (16) et opérationnellement reliée audit dispositif d'émission (20) pour commander l'émission dudit faisceau laser (12) ;
ledit système étant **caractérisé en ce qu'**il comprend également :
- une seconde zone opérationnelle qui s'étend complètement à l'extérieur de ladite première zone opérationnelle et dans laquelle est destiné à être positionné un cordon (11) de matériau d'apport prévu sur l'entrée de ladite fente de brasage (21) ;
ladite unité de commande programmable (19) étant prévue pour commander audit dispositif d'émission (20) de rayonner, avec ledit faisceau laser (12), l'extrémité de liaison (8') dudit premier composant (8) métallique et/ou la portion de liaison (9') dudit second composant (9) métallique sur une zone d'impact (13) qui s'étend à l'intérieur de ladite première zone opérationnelle et à l'extérieur de ladite seconde zone opérationnelle où est destiné à être disposé ledit cordon (11) ;
ladite unité de commande programmable (19) étant prévue pour commander audit dispositif d'émission (20) d'émettre ledit faisceau laser (12) avec une densité de puissance, au niveau de ladite zone d'impact (13), comprise entre 5 W/mm² et 400 W/mm² en régime continu, ou comprise entre 100 W/mm² et 1 000 W/mm² en régime impulsionnel.

14. Système pour la réalisation de brasages selon la revendication 13, **caractérisé en ce que** ladite tête opérationnelle (16) comprend une pluralité de dispositifs d'émission (20) d'un faisceau laser disposés et espacés l'un de l'autre autour d'un axe (Y) de rotation de ladite tête opérationnelle (16) et autour de ladite première zone opérationnelle.

15. Système pour la réalisation de brasages selon la revendication 14, **caractérisé en ce que** ladite tête opérationnelle (16) est susceptible d'osciller autour dudit axe (Y) dans les sens de rotation opposés.
